# FASCICULE DE BREVET EUROPEEN

(11) **EP 0 736 489 B1**
(45) Date de publication et mention de la délivrance du brevet: **01.07.1998**
(21) Numéro de dépôt: 96400701.7
(22) Date de dépôt: 01.04.1996
(51) Int. Cl.: C01B 33/141, D21H 17/68, C02F 1/52, C04B 28/02, E21B 33/13

(54) **Suspension aqueuse de silice et de sulfate d'aluminium ou d'alun, procédés de préparation et utilisations de ladite suspension**
Wässrige Suspension enthaltend Kieselsäure und Aluminumsulfat oder Alaun, Verfahren zu deren Herstellung und Verwendungen dieser Suspension
Aqueous suspension of silica and aluminium sulfate or alum, processes for its preparation and uses thereof

(30) Priorité: 03.04.1995 FR 9503901
(43) Date de publication de la demande: 09.10.1996
(73) Titulaire: RHODIA CHIMIE, 92408 Courbevoie Cédex (FR)
(72) Inventeur: Prat, Evelyne, 93500 Pantin (FR); Frouin, Laurent, 94240 l'Hay les Roses (FR)
(74) Mandataire: Dubruc, Philippe

(56) Documents cités:
- EP-A- 0 110 762
- EP-A- 0 329 509
- EP-A- 0 407 262
- EP-A- 0 520 862
- WO-A-95/09128
- US-A- 3 291 626
- CHEMICAL ABSTRACTS, vol. 112, no. 18, 30 Avril 1990 Columbus, Ohio, US; abstract no. 161657r, KUPRIENKO & AL.: "Use of aluminum hydroxynitrate as a stabilizer of aqueous dispersions of silicates" XP002005630 & DOKL. AKAD. NAUK SSSR, vol. 310, no. 2, 1990, pages 392-394,

## Description

La présente invention concerne une nouvelle suspension aqueuse de silice, notamment de silice précipitée, et de composé d'aluminium, en particulier de sulfate d'aluminium, et des procédés pour sa préparation.

Elle est également relative à ses utilisations, en particulier dans le domaine des pâtes cimentaires, à base de ciment et d'eau, des mortiers et bétons.

Les suspensions aqueuses de silice sont employées dans des domaines très variés, et notamment dans les industries du papier et du béton.

Pour ces diverses applications, en particulier dans le domaine du béton, il est intéressant de disposer de suspensions présentant une teneur en matière sèche élevée. Or, de telles suspensions présentent généralement des viscosités excessivement élevées, ce qui entraîne notamment des difficultés de pompage et réduit donc les possibilités d'utilisation industrielle.

De plus, ces suspensions, en particulier celles de silice de granulométrie élevée, ont tendance à sédimenter ou décanter au cours du stockage. On observe en effet très souvent, après une période de quelques jours de stockage, la formation d'une couche dure surmontée d'une bouillie fluide pauvre en matière sèche. Il est alors le plus souvent impossible de remettre la silice en suspension ou d'obtenir une bouillie homogène et de viscosité suffisamment faible pour être facilement pompable et donc utilisable industriellement.

La présente invention a notamment pour but de proposer de nouvelles suspensions aqueuses contenant de la silice ne présentant pas les inconvénients susmentionnés.

Ainsi, l'objet principal de la présente invention consiste en des suspensions aqueuses (ou slurries) contenant une silice, de préférence une silice précipitée, qui ont une aptitude à former un gel, lorsqu'elles sont laissées au repos, ce qui évite la sédimentation ou décantation du produit au cours du stockage, assurant ainsi la stabilité de la suspension sur plusieurs semaines ou même plusieurs mois, suspension qui conserve substantiellement son homogénéité sur une telle période. Le gel formé est en outre totalement réversible sous faible sollicitation : ainsi, il se transforme sous faible cisaillement ou agitation en une suspension homogène, de faible viscosité et donc facilement pompable.

La suspension selon l'invention est une suspension aqueuse de silice et de composé d'aluminium choisi parmi le sulfate d'aluminium, les sulfates d'aluminium basiques, les aluns et leurs mélanges, caractérisée en ce qu'elle possède un pH inférieur à 4 et une teneur en matière sèche comprise entre 10 et 50 % en poids, et en ce qu'elle se présente, après avoir été laissée au repos pendant 48 heures, sous la forme d'un gel, ledit gel étant réversible sous faible cisaillement.

La teneur en matière sèche de la suspension selon l'invention est comprise entre 10 et 50 % en poids, de préférence entre 15 et 45 % en poids. Elle est par exemple comprise entre 20 et 40 % en poids.

La suspension selon l'invention possède un pH (mesuré selon la norme ISO 787/9 (pH d'une suspension à 5 % dans l'eau)) inférieur à 4, de préférence inférieur à 3,5 et, par exemple, inférieur à 3. Ce pH est en outre généralement d'au moins 2, en particulier d'au moins 2,2.

Ladite suspension possède avantageusement une teneur en silice (exprimée en silice anhydre) comprise entre 1 et 49 % en poids, de préférence entre 3 et 35 % en poids. Cette teneur peut être comprise entre 5 et 30 % en poids, en particulier entre 8 et 20 % en poids.

Elle possède avantageusement une teneur en composé d'aluminium (exprimée en composé d'aluminium anhydre) comprise entre 1 et 49 % en poids, de préférence entre 3 et 40 % en poids. Cette teneur peut être comprise entre 5 et 35 % en poids, en particulier entre 10 et 30 % en poids.

Selon une variante de l'invention, ladite suspension aqueuse présente une teneur en silice comprise entre 11 et 20 % en poids et/ou une teneur en composé d'aluminium (exprimée en composé d'aluminium anhydre) comprise entre 21 et 30 % en poids.

Le composé d'aluminium contenu dans la suspension selon l'invention est choisi parmi le sulfate d'aluminium, les aluns et leurs mélanges.

Par aluns, on entend des composés du sulfate d'aluminium avec des sulfates alcalins, de formule générale MAI(SO₄)₂, 12H₂O (avec M = Li, Na ou K par exemple). Le radical ammonium ou le thallium monovalent peuvent également former des aluns avec le sulfate d'aluminium.

De manière avantageuse, le composé d'aluminium est un sulfate d'aluminium.

Ledit sulfate d'aluminium peut être issu d'un sulfate d'aluminium anhydre (Al₂(SO₄)₃) ou d'un sulfate d'aluminium hydraté (notamment de formule Al₂(SO₄)₃, 14H₂O ou Al₂(SO₄)₃, 18H₂O).

Il peut s'agir d'un sulfate d'aluminium basique choisi, par exemple, parmi ceux de formule :

[Al_{A}(OH)_{B}(SO₄)_{C}(H₂O)_{E}]ₙ

avec :
n entier positif,
A égal 1,
B compris entre 0,75 et 2,
C compris entre 0,5 et 1,12,
E est compris entre 1,5 et 4 lorsque le sulfate est solide et E supérieur à 4 lorsque le sulfate est sous forme d'une solution aqueuse, et
B + 2C = 3. Il peut s'agir par exemple des sulfates d'aluminium basiques décrits dans US-A-4.877.597.

Il peut s'agir également d'un sulfate d'aluminium basique choisi, par exemple, parmi ceux de formule :

Al_{A}(OH)_{B}(SO₄)_{C}(SiO_{X})_{D}(H₂O)_{E}

avec :
A égal 1,
B compris entre 0,75 et 2,
C compris entre 0,3 et 1,12,
D compris entre 0,005 et 0,1,
2 < X ≤ 4
E est compris entre 1,5 et 4 lorsque le sulfate est solide et E supérieur à 4 lorsque le sulfate est sous forme d'une solution aqueuse, et
3 = B + 2C + 2D(X - 2). Il peut s'agir par exemple des sulfates d'aluminium basiques décrits dans US-A-4.981.675.

Si la silice contenue dans la suspension selon l'invention peut être notamment choisie parmi les fumées de silice, les silices précipitées, les composés de la silice comprenant majoritairement de la silice choisis parmi les silico-aluminates, par exemple le Tixosil 28 commercialisé par Rhône-Poulenc, les smectites ou les silicates de magnésium type smectite et leurs mélanges, on utilise de manière préférée, à titre de silice, au moins une silice précipitée.

Par silice précipitée, on entend ici une silice obtenue par précipitation à partir de la réaction d'un silicate de métal alcalin avec un acide, en général inorganique, à un pH adéquat du milieu de précipitation, en particulier un pH basique, neutre ou peu acide ; le mode de préparation de la silice peut être quelconque (addition d'acide sur un pied de cuve de silicate, addition simultanée totale ou partielle d'acide ou de silicate sur un pied de cuve d'eau ou de solution de silicate, etc...) et est choisi en fonction du type de silice que l'on souhaite obtenir ; à l'issue de l'étape de précipitation, on procède en général à une étape de séparation de la silice du milieu réactionnel selon tout moyen connu, filtre presse ou filtre sous vide par exemple ; on recueille ainsi un gâteau de filtration, qui est lavé si nécessaire ; ce gâteau peut être, éventuellement après délitage, séché par tout moyen connu, notamment par atomisation, puis éventuellement broyé et/ou aggloméré.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude préférée à la dispersion et à la désagglomération des silices utilisables dans les suspensions selon l'invention peut être quantifiée au moyen d'un test spécifique de désagglomération.

Le test de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve de granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport, appelé facteur de désagglomération aux ultra-sons (F_{D}), est d'autant plus élevé que la silice présente une aptitude à la désagglomération élevée.

La silice précipitée contenue, de manière préférée, dans la suspension selon l'invention présente généralement une surface spécifique CTAB comprise entre 50 et 250 m²/g, en particulier entre 100 et 240 m²/g.

La suspension selon l'invention contient avantageusement une silice précipitée ayant une très bonne aptitude à la dispersion et à la désagglomération.

On peut ainsi employer une silice précipitée telle que décrite dans la demande de brevet européen EP 0520862. En particulier, cette silice précipitée (S₁) peut de préférence se présenter sous forme de billes sensiblement sphériques ayant une surface spécifique BET comprise entre 140 et 200 m²/g, une surface spécifique CTAB comprise entre 140 et 200 m²/g, une distribution poreuse telle que le volume poreux constitué par les pores dont le diamètre est compris entre 175 et 275 Å représente au moins 50 %, par exemple au moins 60 %, du volume poreux constitué par les pores de diamètres inférieurs ou égaux à 400 Å (et, de préférence, une taille moyenne d'au moins 80 µm, par exemple d'au moins 100 µm). Ces billes peuvent présenter un facteur de désagglomération aux ultra-sons (F_{D}) supérieur à 5,5 ml et un diamètre médian (⌀₅₀), après désagglomération aux ultra-sons, inférieur à 5 µm.

On peut également employer comme silice ayant une excellente aptitude à la dispersion et à la désagglomération une silice précipitée, se présentant en général sous forme de poudre, de granulés ou de billes sensiblement sphériques, choisie parmi :
- une silice précipitée (S₂) possédant :
   - une surface spécifique CTAB comprise entre 140 et 240 m²/g,
   - un facteur de désagglomération aux ultra-sons (F_{D}) supérieur à 11 ml, par exemple supérieur à 12,5 ml,
   - un diamètre médian (⌀₅₀), après désagglomération aux ultra-sons, inférieur à 2,5 µm, en particulier inférieur à 2,4 µm, par exemple inférieur à 2,0 µm ;
- un silice précipitée (S₃) possédant :
   - une surface spécifique CTAB comprise entre 140 et 240 m²/g,
   - une distribution poreuse telle que le volume poreux constitué par les pores dont le diamètre est compris entre 175 et 275 Å représente moins de 50 %, par exemple moins de 40 % , du volume poreux constitué par les pores de diamètres inférieurs ou égaux à 400 Å,
   - un facteur de désagglomération aux ultra-sons (F_{D}) supérieur à 5,5 ml,
   - un diamètre médian (⌀₅₀), après désagglomération aux ultra-sons, inférieur à 5 µm;
- une silice précipité (S₄) possédant:
   - une surface spécifique CTAB comprise entre 100 et 140 m²/g,
   - un diamètre médian (⌀₅₀), après désagglomération aux ultra-sons, inférieur à 2,8 µm, en particulier inférieur à 2,7 µm, par exemple inférieur à 2,5 µm,
   - en général, un facteur de désagglomération aux ultra-sons (F_{D}) supérieur à 3,0 ml ;
- une silice précipitée (S₅) possédant :
   - une surface spécifique CTAB comprise entre 100 et 140 m²/g,
   - une distribution poreuse telle que le volume poreux constitué par les pores dont le diamètre est compris entre 175 et 275 Å représente moins de 55 %, en particulier moins de 50 %, par exemple moins de 40 %, du volume poreux constitué par les pores de diamètres inférieurs ou égaux à 400 Å,
   - un diamètre médian (⌀₅₀), après désagglomération aux ultra-sons, inférieur à 4,5 µm, en particulier inférieur à 4 µm, par exemple inférieur à 3,8 µm,
   - en général, un facteur de désagglomération aux ultra-sons (F_{D}) supérieur à 3,0 ml.

La silice, en particulier la silice précipitée, contenue dans la suspension selon l'invention peut être finement divisée, notamment suite à un broyage (par exemple un broyage humide) ou une désagglomération aux ultra-sons.

Néanmoins, l'utilisation du composé d'aluminium, en particulier de sulfate d'aluminium, permet de stabiliser également des suspensions de silice non finement divisée et ayant, au contraire, une granulométrie élevée, en particulier telle que le d₁₀ soit compris entre 4 et 10 µm, le d₅₀ soit compris entre 15 et 30 µm et le d₉₀ soit compris entre 50 et 100 µm. Le d₁₀ représente le diamètre de particules tel que 10 % de la population des particules de silice présentent un diamètre inférieur ; de même, le d₅₀ (respectivement le d₉₀) représente le diamètre de particules tel que 50 % (respectivement 90 %) de la population des particules de silice présentent un diamètre inférieur. Ces mesures granulométriques sont de préférence effectuées par diffraction laser sur un granulomètre CILAS. Il est à noter que telles suspensions de silice, sans additivation du composé d'aluminium, décantent après moins d'une semaine de stockage et conduisent à la formation d'un dépôt que l'on ne peut redisperser aisément, en particulier sous agitation mécanique.

Une caractéristique essentielle de la suspension selon l'invention est son aptitude à former un gel après avoir été laissée au repos : ceci évite les phénomènes de sédimentation ou décantation au cours du stockage, assurant ainsi la stabilité de la suspension sur plusieurs semaines ou même plusieurs mois (notamment au moins trois mois) ; la suspension conserve substantiellement son homogénéité sur une telle période.

Ainsi, selon la présente invention, la suspension se présente, après une période de repos de 48 heures, de préférence déjà après une période de repos de 24 heures, voire après une période de repos de 2 heures seulement, sous la forme d'un gel, ce gel étant réversible sous faible cisaillement.

De manière préférée, la solution se présente ainsi, après une période de repos de 24 heures, sous la forme d'un gel qui possède une viscosité (V₁), mesurée sous un cisaillement de 1 s⁻¹ pendant 1 minute, supérieure à 0,6 Pa.s, de préférence supérieure à 1,5 Pa.s, en particulier supérieure à 2,0 Pa.s (et en général inférieure à 25 Pa.s).

Le mode opératoire pour expliciter le caractère de gel de la suspension selon l'invention après une période de repos est le suivant.

On introduit le gel dans une cellule de mesure MS 125 ou MS 145 d'un rhéomètre RHEOMAT Z115 de CONTRAVES ; on effectue un cisaillement de 500 s⁻¹ pendant 1 minute afin de déstructurer le gel ; puis on laisse le gel se reformer pendant 24 heures, en prenant soin de couvrir la cellule d'un film plastique étanche afin de prévenir l'éventuelle déshydratation du gel ; à l'issue de ces 24 heures, on peut procéder aux opérations suivantes :
- on effectue une mesure de viscosité (V₁) en imposant un cisaillement de 1 s⁻¹ pendant 1 minute ; la valeur mesurée est d'autant plus élevée que la tendance de la suspension à gélifier est forte ;
- on peut effectuer ensuite une autre mesure de viscosité (V₂) en imposant un cisaillement de 50 s⁻¹ pendant 1 minute ; la valeur mesurée est d'autant plus faible que le gel est fragile ; les suspensions selon l'invention présentent, en général, une viscosité V₂ comprise entre 0,05 et 0,4 Pa.s ;
- on peut effectuer enfin une autre mesure de viscosité (V₃) en imposant un cisaillement de 500 s⁻¹ pendant 1 minute ; la valeur mesurée est d'autant plus faible que l'aptitude de la suspension à être pompée est élevée ; les suspensions selon l'invention présentent, en général, une viscosité V₃ comprise entre 0,03 et 0,35 Pa.s.

Le gel sous la forme duquel se présente la suspension selon l'invention, après une période de repos de 48 heures (de préférence déjà après une période de repos de 24 heures, voire après une période de repos de 2 heures seulement), est réversible sous faible sollicitation : ainsi, il se transforme sous faible cisaillement en une suspension homogène, de faible viscosité et donc facilement pompable ; plus particulièrement, ledit gel est tel qu'un cisaillement de 500 s⁻¹ pendant 1 minute le transforme en une suspension qui présente une viscosité (Vᵣ), mesurée sous un cisaillement de 50 s⁻¹ pendant 1 minute, d'au plus 0,35 Pa.s, de préférence d'au plus 0,30 Pa.s, par exemple d'au plus 0,25 Pa.s.

Le mode opératoire pour déterminer cette viscosité (Vᵣ) est le suivant.

On introduit le gel dans une cellule de mesure MS 125 ou MS 145 d'un RHEOMAT Z115 de CONTRAVES ; on effectue un cisaillement de 500 s⁻¹ pendant 1 minute afin de déstructurer le gel ; on effectue alors une mesure de viscosité (Vᵣ) du produit obtenu, en imposant un cisaillement de 50 s⁻¹ pendant 1 minute.

Il est à noter que les caractéristiques des suspensions selon l'invention sont obtenues sans l'utilisation d'agents surfactants, qu'ils soient anioniques, cationiques, amphotères ou non-ioniques. Ainsi, de manière préférée, mais non obligatoire, les suspensions selon l'invention ne contiennent pas d'agents surfactants.

La présente invention a également pour objet des procédés de préparation des suspensions décrites précédemment.

La suspension selon l'invention peut être préparée éventuellement par un procédé comprenant le mélange, sous agitation (agitation mécanique notamment), d'une solution aqueuse du composé d'aluminium, en particulier de sulfate d'aluminium, avec un composé de la silice comprenant majoritairement de la silice et de préférence avec une silice précipitée, telle que décrite plus haut, se présentant sous forme de poudre, de granulés ou de billes sensiblement sphériques, notamment une silice précipitée S₁ à S₅.

La suspension selon l'invention peut aussi être préparée par un procédé comprenant le mélange, sous agitation, d'une suspension aqueuse de silice avec ledit composé d'aluminium, sous forme de poudre et, éventuellement, de l'eau. Tout type de suspension aqueuse de silice peut être utilisée telle qu'une suspension aqueuse de silice précipitée, une suspension colloïdale de silice appelée communément sol de silice, cette dernière pouvant être obtenue par exemple par filtration de silicate de sodium sur une résine échangeuse d'ion ou une suspension aqueuse d'un composé de la silice comprenant majoritairement de la silice tel que défini plus haut.

En particulier, ce procédé comprend l'addition, sous agitation mécanique, de sulfate d'aluminium, par exemple anhydre ou, de préférence, hydraté, sous forme de poudre et, éventuellement, d'eau, dans une suspension aqueuse de silice précipitée, puis la poursuite de l'agitation du mélange ainsi obtenu.

La suspension selon l'invention peut enfin être préparée par un procédé comprenant le mélange, sous agitation, d'une suspension aqueuse de silice et, éventuellement, d'eau, avec une solution dudit composé d'aluminium, cette dernière se trouvant à une température comprise entre 15 et 130 °C. En particulier, ce procédé comprend le mélange, sous agitation mécanique, d'une suspension aqueuse de silice précipitée et, éventuellement, d'eau, avec une solution de sulfate d'aluminium (anhydre ou, de préférence, hydraté) se trouvant à une température comprise entre 15 et 30 °C ou, de manière préférée, entre 95 et 130 °C (notamment du sulfate d'aluminium hydraté fondu à cette température dans son eau de cristallisation), en particulier entre 100 et 120°C.

Dans les procédés de préparation mettant en oeuvre une suspension aqueuse de silice, celle-ci peut être éventuellement obtenue par mise en suspension dans l'eau, sous agitation (agitation mécanique notamment), d'une silice sous forme solide, en particulier d'une silice précipitée S₁ à S₅.

Après cette étape de mise en suspension dans l'eau, on peut déliter mécaniquement la suspension. Le délitage (ou défloculation) mécanique peut s'effectuer dans un déliteur/malaxeur. On réalise en général un délitage chimique conjointement à ce délitage mécanique, en introduisant, dans le déliteur/malaxeur, de l'aluminate de sodium et, de préférence, et en général simultanément, un acide (notamment un acide inorganique tel que l'acide sulfurique), de sorte que le pH de la suspension reste compris entre 6 et 7 et le rapport pondéral Al/SiO₂ soit compris entre 1000 et 3300 ppm. On peut éventuellement poursuivre le délitage mécanique une fois réalisée cette addition.

Après l'étape de délitage ou l'étape de mise en suspension dans l'eau (si on ne met pas en oeuvre d'étape de délitage), on peut effectuer un broyage humide ou une désagglomération aux ultra-sons de la suspension.

Le broyage humide peut être réalisé en faisant passer la suspension dans un broyeur de type moulin colloïdal ou un broyeur à billes.

La désagglomération aux ultra-sons peut être effectuée en soumettant la suspension à des ondes ultrasonores (ultrasonification), au moyen d'une sonde ultra-sons de haute puissance.

Néanmoins, de manière très préférée, la suspension selon l'invention est préparée par un procédé mettant en oeuvre une suspension aqueuse de silice précipitée, ayant été obtenue par délitage mécanique (notamment dans un déliteur/malaxeur) d'un gâteau de filtration issu d'une réaction de précipitation de silice, réaction dans laquelle, notamment, on fait agir un silicate de métal alcalin M avec un agent acidifiant.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où cet agent acidifiant est l'acide sulfurique, sa concentration est de préférence comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin M dans lequel M est le sodium ou le potassium.

Le silicate de métal alcalin M présente habituellement une concentration (exprimée en SiO₂) comprise entre 40 et 330 g/l, par exemple entre 60 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SiO₂/Na₂O compris entre 2 et 4, plus particulièrement entre 3,0 et 3,7.

Selon un premier mode de réalisation avantageux de l'invention, le gâteau de filtration est obtenu par un procédé comprenant : (A) une réaction de précipitation de silice par action d'un silicate de métal alcalin M avec un agent acidifiant, pour laquelle :
(i) on forme un pied de cuve initial comportant au moins une partie de la quantité totale du silicate de métal alcalin M engagé dans la réaction et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied du cuve jusqu'à l'obtention d'une valeur du pH du milieu réactionnel d'au moins environ 7,
(iii) on ajoute au milieu réactionnel de l'agent acidifiant et, le cas échéant, simultanément la quantité de silicate de métal alcalin M, (B) la filtration du mélange réactionnel, de manière à récupérer un gâteau de filtration ayant une teneur en matière sèche comprise entre 8 et 40 % en poids.

Une concentration faible en silicate et en électrolyte dans le pied de cuve initial sont ici des conditions importantes.

Dans ce mode de réalisation, on opère comme suit.

On forme tout d'abord un pied de cuve qui comprend du silicate ainsi qu'un électrolyte. La quantité de silicate présente dans le pied de cuve peut soit être égale à la quantité totale engagée dans la réaction, soit ne représenter qu'une partie de cette quantité totale.

En ce qui concerne l'électrolyte, ce terme s'entend ici dans son acceptation normale, c'est-à-dire qu'il signifie toute substance ionique ou moléculaire qui, lorsqu'elle est en solution, se décompose ou se dissocie pour former des ions ou des particules chargées.

On utilise en particulier un sel du groupe des sels des métaux alcalins et alcalino-terreux et de préférence le sel du métal M de silicate de départ et de l'agent acidifiant, par exemple le sulfate de sodium dans le cas de la réaction d'un silicate de sodium avec l'acide sulfurique.

Selon une caractéristique essentielle de ce mode de réalisation, la concentration en électrolyte dans le pied de cuve initial est (supérieure à 0 g/l et) inférieure à 17 g/l, de préférence inférieure à 14 g/l.

Selon une autre caractéristique essentielle dudit mode de réalisation, la concentration en silicate dans le pied de cuve initial est (supérieure à O g de SiO₂ par litre et) inférieure à 100 g de SiO₂ par litre. De préférence, cette concentration est inférieure à 80 g/l, notamment à 70 g/l.

Le deuxième étape consiste à ajouter l'agent acidifiant dans le pied de cuve de composition décrite plus haut.

Cette addition qui entraîne une baisse corrélative du pH du milieu réactionnel se fait jusqu'à ce qu'on atteigne une valeur d'au moins environ 7, généralement comprise entre 7 et 8.

Une fois cette valeur atteinte, et dans le cas d'un pied de cuve de départ ne comprenant qu'une partie de la quantité totale du silicate engagé, on procède alors avantageusement à une addition simultanée d'agent acidifiant et de la quantité restante de silicate.

La réaction de précipitation proprement dite est terminée lorsque l'on a ajouté toute la quantité restante de silicate.

Il est avantageux à la fin de la précipitation et notamment après l'addition simultanée précipitée, d'effectuer un mûrissement du milieu réactionnel, ce mûrissement pouvant par exemple durer de 5 minutes à 1 heure.

Il est enfin possible dans tous les cas (c'est-à-dire aussi bien dans le cas d'un pied de cuve de départ ne comprenant qu'une partie de la quantité totale du silicate engagé que dans le cas d'un pied de cuve de départ comprenant la quantité totale de silicate engagé), après la précipitation, dans une étape ultérieure éventuelle, d'ajouter au milieu réactionnel une quantité supplémentaire d'agent acidifiant. Cette addition se fait généralement jusqu'à l'obtention d'une valeur de pH comprise entre 3 et 6,5, de préférence entre 4 et 6,5.

La température du milieu réactionnel est généralement comprise entre 70 et 98 °C.

Selon une variante, la réaction est effectuée à une température constante comprise entre 80 et 95 °C. Selon une autre variante, la température de fin de réaction est plus élevée que la température de début de réaction : ainsi, on maintient la température au début de la réaction de préférence entre 70 et 95 °C ; puis, on augmente la température en quelques minutes de préférence jusqu'à une valeur comprise entre 80 et 98 °C à laquelle elle est maintenue jusqu'à la fin de la réaction.

On obtient à l'issue des opérations qui viennent d'être décrites un milieu réactionnel formé d'une bouillie de silice.

Le stade (B) de ce premier mode de réalisation avantageux de l'invention consiste alors en la filtration de cette bouillie de silice, de manière à récupérer un gâteau de filtration ayant une teneur en matière sèche comprise entre 8 et 40 % en poids.

La filtration peut se faire selon toute méthode convenable, par exemple par filtre à bande, filtre rotatif sous vide ou, de préférence, par filtre presse.

Les gâteaux obtenus par filtration presse présentent en général des teneurs en matière sèche assez élevées.

Il est à noter que la silice précipitée S₁ mentionnée précédemment dans l'exposé peut être préparée, en séchant par atomisation, de préférence au moyen d'un atomiseur à à buses, le gâteau de filtration obtenu (en particulier par filtre presse), ce gâteau devant de plus présenter immédiatement avant son séchage un taux de matière sèche d'au plus 24 % en poids (de préférence d'au plus 23 % en poids) et supérieur à 18 % en poids (de préférence supérieur à 20 % en poids), ledit gâteau pouvant avoir été, avant le séchage, délité mécaniquement et, éventuellement, chimiquement comme indiqué par ailleurs.

Selon un second mode de réalisation avantageux de l'invention, le gâteau de filtration est obtenu par un procédé comprenant :
(A) une réaction de précipitation de silice par action d'un silicate de métal alcalin M avec un agent acidifiant, pour laquelle :
   (i) on forme un pied de cuve initial comportant une partie de la quantité totale du silicate de métal alcalin M engagé dans la réaction, la concentration en silicate (exprimée en SiO₂) dans ledit pied de cuve étant inférieure à 20 g/l,
   (ii) on ajoute l'agent acidifiant audit pied de cuve initial jusqu'à ce qu'au moins 5 % de la quantité de M₂O présente dans ledit pied de cuve initial soient neutralisés,
   (iii) on ajoute au milieu réactionnel simultanément de l'agent acidifiant et la quantité restante de silicate de métal alcalin M telle que le rapport quantité de silicate ajoutée (exprimée en SiO₂)/quantité de silicate présente dans le pied de cuve initial (exprimée en SiO₂), appelé taux de consolidation, soit supérieur à 4 et d'au plus 100,
(B) la filtration du mélange réactionnel, de manière à récupérer un gâteau de filtration ayant une teneur en matière sèche comprise entre 8 et 40 % en poids.

Une concentration très faible en silicate dans le pied de cuve initial ainsi qu'un taux de consolidation approprié lors de l'étape d'addition simultanée sont ici des conditions importantes.

Dans ce mode de réalisation, on opère comme suit.

On forme tout d'abord un pied de cuve qui comprend du silicate. La quantité de silicate présente dans ce pied de cuve initial ne représente avantageusement qu'une partie de la quantité totale de silicate engagée dans la réaction.

Selon une caractéristique essentielle de ce mode de réalisation, la concentration en silicate dans le pied de cuve initial est (supérieure à 0 g de SiO₂ par litre et) inférieure à 20 g de SiO₂ par litre.

Cette concentration peut être d'au plus 11 g/l et, éventuellement, d'au plus 8 g/l.

Notamment lorsque la filtration effectuée ultérieurement est réalisée au moyen d'un filtre presse, cette concentration peut être d'au moins 8 g/l, en particulier comprise entre 10 et 15 g/l.

Le pied de cuve initial peut comprendre un électrolyte. Néanmoins, de préférence, aucun électrolyte n'est utilisé au cours de ce mode de réalisation ; en particulier, de manière préférée, le pied de cuve initial ne comprend pas d'électrolyte.

La deuxième étape consiste à ajouter l'agent acidifiant dans le pied de cuve de composition décrite plus haut.

Ainsi, dans cette deuxième étape, on ajoute l'agent acidifiant audit pied de cuve initial jusqu'à ce qu'au moins 5 %, de préférence au moins 50 %, de la quantité de M₂O présente dans ledit pied de cuve initial soient neutralisés.

De manière préférée, dans cette deuxième étape, on ajoute l'agent acidifiant audit pied de cuve initial jusqu'à ce que 50 à 99 % de la quantité de M₂O présente dans ledit pied de cuve initial soient neutralisés.

Une fois qu'est atteinte la valeur souhaitée de quantité de M₂O neutralisé, on procède alors à une addition simultanée (étape (iii)) d'agent acidifiant et d'une quantité de silicate de métal alcalin M telle que le taux de consolidation, c'est-à-dire le rapport quantité de silicate ajoutée (exprimée en SiO₂)/quantité de silicate présente dans le pied de cuve initial (exprimée en SiO₂), soit supérieur à 4 et d'au plus 100.

Selon une variante, on procède à cette addition simultanée d'agent acidifiant et d'une quantité de silicate de métal alcalin M telle que de taux de consolidation est plus particulièrement compris entre 12 et 100, de préférence entre 12 et 50, notamment entre 13 et 40.

Selon une autre variante, on procède à cette addition simultanée d'agent acidifiant et d'une quantité de silicate de métal alcalin M telle que le taux de consolidation est plutôt supérieur à 4 et inférieur à 12, de préférence compris entre 5 et 11,5, notamment entre 7,5 et 11. Cette variante est, en général, mise en oeuvre quand la concentration en silicate dans le pied de cuve initial est d'au moins 8 g/l, en particulier comprise entre 10 et 15 g/l, par exemple entre 11 et 15 g/l.

De manière préférée, pendant toute l'étape (iii), la quantité d'agent acidifiant ajoutée est telle que 80 à 99 %, par exemple 85 à 97 %, de la quantité de M₂O ajoutée soient neutralisés.

Dans l'étape (iii), il est possible de procéder à l'addition simultanée d'agent acidifiant et de silicate à un premier palier de pH du milieu réactionnel, pH₁, puis à un second palier de pH du milieu réactionnel, pH₂, tel que 7 < pH₁ < pH₁ < 9.

La réaction de précipitation proprement dite est terminée lorsque l'on a ajouté toute la quantité restante de silicate.

Il peut être avantageux d'effectuer, notamment après l'addition simultanée précitée, un mûrissement du milieu réactionnel, ce mûrissement pouvant par exemple durer de 1 à 60 minutes, en particulier de 5 à 30 minutes.

Il est enfin souhaitable, après la précipitation, dans une étape ultérieure, notamment avant le mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, de préférence entre 4 et 5,5. Elle permet notamment de neutraliser toute la quantité de M₂O ajoutée lors de l'étape (iii).

L'agent acidifiant lors de cette addition est généralement identique à celui employé lors de l'étape (iii).

La température du milieu réactionnel est habituellement comprise entre 60 et 98 °C.

De préférence, l'addition d'agent acidifiant lors de l'étape (ii) s'effectue dans un pied de cuve initial dont la température est comprise entre 60 et 96 °C.

Selon une variante, la réaction est effectuée à une température constante comprise entre 75 et 96 °C. Selon une autre variante, la température de fin de réaction est plus élevée que la température de début de réaction : ainsi, on maintient la température au début de la réaction de préférence entre 70 et 96 °C, puis on augmente la température en cours de réaction en quelques minutes, de préférence jusqu'à une valeur comprise entre 80 et 98 °C, valeur à laquelle elle est maintenue jusqu'à la fin de la réaction.

On obtient à l'issue des opérations qui viennent d'être décrites un milieu réactionnel formé d'une bouillie de silice.

Le stade (B) de ce second mode de réalisation avantageux de l'invention consiste alors en la filtration de cette bouillie de silice, de manière à récupérer un gâteau de filtration ayant une teneur en matière sèche comprise entre 8 et 40 % en poids.

Si la filtration peut se faire selon toute méthode convenable (par exemple par filtre presse, filtre à bande ou filtre rotatif sous vide), elle est avantageusement effectuée par filtre presse, par exemple quand la concentration en silicate dans le pied de cuve initial est d'au moins 8 g/l (et inférieure à 20 g/l), en particulier comprise entre 10 et 15 g/l, notamment entre 11 et 15 g/l.

Les gâteaux obtenus par filtration presse présentent en général des teneurs en matière sèche assez élevées.

Il est à noter que les silices précipitées S₂ à S₅ mentionnées précédemment dans l'exposé peuvent être préparées en séchant par atomisation, de préférence au moyen d'un atomiseur à buses (en général si on souhaite les obtenir sous forme de billes sensiblement sphériques) ou au moyen d'un atomiseur à turbines (en général si on souhaite les obtenir sous forme de poudre), le gâteau obtenu (en général, par filtration presse, si on souhaite les obtenir sous billes sensiblement sphériques, ou, par filtration rotatif sous vide, si on souhaite les obtenir sous forme de poudre) ; ce gâteau peut avoir été, avant le séchage, délité mécaniquement et, éventuellement, chimiquement comme indiqué par ailleurs.

Lorsque le gâteau à sécher présente un taux de matière sèche supérieur à 15 % en poids, le séchage est de préférence effectué au moyen d'un atomiseur à buses ; lorsque ce taux est d'au plus 15 % en poids, le séchage est de préférence effectué au moyen d'un atomiseur à turbines.

Les silices précipitées S₂ à S₅ peuvent être obtenues sous forme de granulés en soumettant à une opération d'agglomération (notamment la compression directe, la granulation voie humide, l'extrusion ou, de préférence, le compactage à sec) le produit séché (en particulier à partir d'un gâteau ayant un taux de matière sèche d'au plus 15 % en poids).

Les suspensions selon l'invention issues des deux modes de réalisation avantageux décrits précédemment présentent, en général, les meilleures propriétés.

Notamment dans les deux modes de réalisation avantageux de l'invention, le gâteau de filtration peut être lavé à l'eau si nécessaire, en particulier pour éliminer des sels de métal alcalin M formés lors de la réaction de précipitation. Par exemple, dans le cas où la précipitation met en jeu du silicate de sodium et de l'acide sulfurique, on peut isoler à l'issue du stade (B) un gâteau présentant une teneur en Na₂SO₄ inférieure à 1,5 % en poids.

Il est à noter que l'on peut, éventuellement, effectuer un réempatage du gâteau de filtration pour augmenter son taux de matière sèche à la valeur souhaitée comprise entre 8 et 40 % en poids. Le réempatage consiste à ajouter audit gâteau de la silice sous forme solide (silice pulvérulante) en quantité suffisante ; en particulier cette silice peut être obtenue par séchage, notamment par atomisation, d'une partie du gâteau à enrichir. On peut également obtenir de la silice pulvérulante en effectuant un séchage classique du gâteau après lavage par des solvants organiques.

La suspension selon l'invention est donc préférentiellement préparée par un procédé mettant en oeuvre une suspension aqueuse de silice précipitée, cette suspension-ci ayant été obtenue par délitage mécanique d'un gâteau de filtration de silice, de manière avantageuse d'un gâteau de filtration obtenu conformément à l'un des deux modes de réalisation précédemment décrits.

On peut réaliser un délitage chimique conjointement à ce délitage mécanique, en introduisant, par exemple, dans un déliteur/malaxeur, de l'aluminate de sodium et, de préférence, et en général simultanément, un acide (notamment un acide inorganique tel que l'acide sulfurique), de sorte que le pH de la suspension reste compris entre 6 et 7 et le rapport pondéral Al/SiO₂ soit compris entre 1000 et 3300 ppm. On peut éventuellement poursuivre le délitage mécanique une fois réalisée cette addition.

Après l'étape de délitage, on peut effectuer, de manière avantageuse, un broyage humide ou une désagglomération aux ultra-sons de la suspension.

Le broyage humide et la désagglomération aux ultra-sons peuvent être réalisés comme indiqué précédemment dans l'exposé.

Préalablement à la désagglomération aux ultra-sons la suspension peut-être soumise à une agitation mécanique.

La suspension aqueuse de silice précipitée, notamment préparée à partir d'un gâteau de filtration obtenu conformément à l'un des deux modes de réalisation avantageux décrits ci-avant, et après ledit broyage humide ou ladite désagglomération aux ultra-sons, est, par exemple, telle que sa teneur en matière sèche est comprise entre 10 et 40 % en poids, sa viscosité, mesurée sous un cisaillement de 50 s⁻¹ pendant 1 minute, est inférieure à 0,04 Pa.s, en particulier inférieure à 0,02 Pa.s, et la quantité de silice contenue dans le surnageant obtenu après centrifugation de ladite suspension à 7500 tr/min pendant 30 minutes représente plus de 50 % , en particulier plus de 60 %, notamment plus de 70 %, voire plus de 90 %, du poids de la silice contenue dans la suspension (quantité mesurée après séchage, du surnageant à 160 °C jusqu'à obtention d'un poids constant de matière).

Enfin, une autre suspension aqueuse de silice précipitée, utilisable dans des procédés de préparation de la suspension selon l'invention et présentant les caractéristiques mentionnées juste ci-dessus, peut, éventuellement, être obtenue par un procédé de transformation du gâteau de filtration synthétisé dans un des deux modes de réalisation avantageux de l'invention décrits plus haut, procédé par lequel :
(a) on lave ledit gâteau avec un solvant organique et on sèche le gâteau ainsi lavé pour obtenir une silice sous forme pulvérulante,
(b) on met en suspension dans l'eau une quantité de ladite silice sous forme pulvérulante telle que la teneur en matière sèche de la suspension aqueuse de silice précipitée obtenue soit comprise entre 10 et 40 % en poids.

Le lavage aux solvants organiques permet de déplacer l'eau présente dans les pores du gâteau. Les solvants utilisés à cet effet sont de préférence des solvants polaires, notamment l'éthanol et l'éther, qui peuvent être utilisés en mélange.

En particulier, on peut effectuer :
- un premier lavage à l'éthanol,
- un second lavage avec un mélange éthanol/éther 50/50,
- un troisième lavage à l'éther.

Le gâteau ainsi lavé peut être séché, par exemple à l'air ambiant. On obtient une teneur en eau libre tout à fait comparable à celle obtenue avec un séchage par atomisation.

Le présent type de séchage peut permettre d'empêcher l'effondrement de porosité dû à l'action des forces de capillarité lors du séchage.

On obtient ainsi une silice (sous forme pulvérulante) très peu agglomérée, de porosité (mesurée par porosimétrie au mercure) très supérieure à celle obtenue par les techniques de séchage par atomisation.

En général, cette silice conduit, lorsqu'elle est remise en suspension dans l'eau en quantité telle que la teneur en matière sèche de la suspension est comprise entre 10 et 40 % en poids, à des suspensions aqueuses de silice précipitée moins visqueuses que celles obtenues par remise en suspension d'une silice obtenue classiquement par séchage par atomisation.

La présentation sous forme de gel, lorsqu'elles sont laissées au repos, des suspensions selon l'invention permet de s'affranchir des problèmes de sédimentation ou décantation du produit, assurant ainsi la stabilité sur plusieurs semaines ou plusieurs mois ; ces suspensions conservent alors leur homogénéité au moins sur une telle période. De plus, le gel formé est totalement réversible sous faible cisaillement : il est "cassé" sous faible sollicitation et se transforme alors en une suspension homogène, de faible viscosité et facilement pompable.

Les suspensions selon l'invention peuvent être employées notamment :
- pour la préparation de pâtes à papier, notamment à titre de charges ou bien comme agents de rétention des charges et fibres fines ;
- pour le traitement des eaux ;
- comme constituants de colles minérales, pour le papier, le carton, le bâtiment.

De plus, elles trouvent des applications particulièrement intéressantes dans le domaine des matériaux de construction.

Ainsi, elles peuvent être employées pour la préparation de pâtes cimentaires (coulis ou compositions gâchées formées à partir de ciment et d'eau (et, éventuellement, d'additifs usuels)), de mortiers et de bétons.

En effet, en plus de leur présentation gel réversible, elles ont pour avantages, de préférence, d'améliorer l'homogénéité, la cohésion et/ou l'adhérence (aspect collant) de ces compositions de ciment.

Parallèlement, elles ne dégradent pas leurs propriétés mécaniques à terme : au contraire, on constate qu'elles conduisent à des valeurs de résistance en compression élevées à 28 jours (en général d'au moins 45 MPa dans le cas des mortiers), notamment lorsqu'on en utilise une quantité telle que la quantité en poids de silice employée (exprimée en silice anhydre) est comprise entre 0,5 et 5 %, en particulier entre 0,5 et 2,5 %, par rapport au poids de ciment et la quantité en poids de composé d'aluminium employé (exprimé en composé d'aluminium anhydre), par exemple de sulfate d'aluminium employé, est comprise entre 0,2 et 6 %, en particulier entre 0,2 et 3 %, par rapport au poids de ciment.

Elles favorisent également le bétonnage par temps froid.

De plus, elles apportent également d'autres avantages remarquables (en plus, notamment, des bonnes propriétés mécaniques à terme) dans le domaine des coulis, mortiers et bétons projetés (au moyen des techniques de projection par voie sèche ou surtout par voie humide, par ajout au niveau de la buse de projection).

Elles conduisent d'abord, sous faible agitation, à des produits parfaitement pompables par les machines de projection classiquement utilisées.

Les conditions d'hygiène et de sécurité, notamment pour le technicien mettant en oeuvre le procédé de projection, sont améliorées du fait du caractère très faiblement irritant de la suspension selon l'invention.

L'utilisation des suspensions selon l'invention permet en outre une diminution importante des pertes à la projection par rebond et l'obtention de couches projetées très épaisses, d'où un gain de productivité.

Dans le cas où la quantité de composé d'aluminium utilisée, notamment de sulfate d'aluminium (exprimée en produit anhydre), est supérieure à 0,5 %, de préférence comprise entre 1,5 et 6 %, par rapport au poids de ciment, on observe de préférence un durcissement rapide de la couche projetée permettant de travailler en toute sécurité, par exemple sous la voûte, dès quelques heures après la projection (application à la réalisation de mortiers et bétons de structure, en particulier).

Dans le cas où la quantité de composé d'aluminium utilisée, notamment de sulfate d'aluminium (exprimée en produit anhydre), est d'au plus 0,5 % par rapport au poids de ciment, le caractère thixotrope et modelable de la composition de ciment est maintenu pendant plus de 0,5 heure après la projection (application à la réalisation de mortiers et bétons talochables, en particulier).

Enfin, les suspensions selon l'invnetion peuvent être employées pour la préparation de pâtes cimentaires (coulis ou compositions gâchées formées à partir de ciment et d'eau (et, éventuellement, d'additifs usuels)), de mortiers et de bétons pour la consolidation des puits de pétrole.

En effet, à la suite d'un forage, du ciment doit être placé entre les tubes qui doivent cuveler le puits et la paroi du trou pour réaliser l'étanchéité de cet espace annulaire.

Un mélange eau-ciment, par exemple 400 à 500 litres d'eau pour une tonne de ciment, ayant un volume correspondant à tout ou partie de l'espace annulaire troutubage est envoyé dans les tubes, puis refoulé par de la boue dans l'espace annulaire par des pompes.

Suivant la profondeur de mise en place du ciment, des additifs particuliers peuvent être ajoutés au ciment pour ajuster ces caractéristiques hydrauliques et mécaniques, qui sont affectées par la température et la pression variant avec la profondeur.

Dans certains cas, en particulier dans les zones proches du fond de la mer, où les températures avoisines les 4 °C, les temps de prise des mélanges sont excessivement longs. Il est alors nécessaire d'améliorer leur homogénéité dans l'attente du durcissement.

Dans le cas de temps de prise élevés, l'utilisation des suspensions selon l'invention contenant une quantité de sulfate d'aluminium (exprimé en produit anhydre), supérieure à 0,5 %, de préférence de 1,5 à 6 % en poids par rapport au ciment, permet d'obtenir un durcissement rapide du mélange. L'utilisation des suspensions conduit également, sous faible agitation, à des mélanges parfaitement pompables, ce qui facilite leur mise en place dans l'espace annulaire.

Les exemples suivants illustrent l'invention sans toutefois en limiter la portée.

### EXEMPLE 1

On prépare un gâteau de silice précipitée G1 de la manière suivante.

Dans un réacteur en acier inoxydable muni d'un système d'agitation par hélices et d'un chauffage par double enveloppe, on introduit:
- 346 litres d'eau
- 7,5 kg de Na₂SO₄ (électrolyte)
- 587 litres de silicates de sodium aqueux présentant un rapport pondéral SiO₂/Na₂O égal à 3,50 et une densité à 20 °C égale à 1,133.

La concentration en silicate (exprimée en SiO₂) dans le pied de cuve est alors de 85 g/l. Le mélange est porté à 79 °C tout en le maintenant sous agitation. On introduit ensuite dans le mélange 386 litres d'acide sulfurique dilué de densité à 20 °C égale à 1,050, jusqu'à obtenir une valeur de pH égale à 8 (mesurée à la température du milieu). La température du milieu réactionnel est de 79 °C pendant les 25 premières minutes, puis elle est portée de 79 °C à 86 °C en 15 mn, et maintenue ensuite à 86 °C jusqu'à la fin de la réaction.

Une fois la valeur du pH égale à 8 atteinte, on introduit conjointement dans le milieu de réaction 82 litres de silicate de sodium aqueux de rapport pondéral SiO₂/Na₂O égal à 3,50 et de densité à 20 °C égale à 1,133 et 131 lites d'acide du type décrit ci-avant, cette introduction simultanée d'acide et de silicate étant réalisée de manière telle que le pH du milieu de réaction soit constamment égal à 8 ± 0,1. Après introduction de la totalité du silicate on continue à introduire l'acide dilué pendant 9 mn de façon à amener le pH du milieu réactionnel à une valeur égale à 5,2. On arrête alors l'introduction d'acide et on maintient la bouillie réactionnelle 5 mn supplémentaires sous agitation.

La durée totale de la réaction est de 118 mn.

On obtient une bouillie de silice précipitée qui est filtrée et lavée au moyen d'un filtre-presse de telle sorte que l'on récupère finalement un gâteau G1 de silice dont la perte au feu est de 78 % (donc une teneur en matière sèche de 22 % en poids) et dont la teneur en Na₂SO₄ est de 1 % en poids.

### EXEMPLE 2

On introduit dans un déliteur malaxeur CELLIER, 4 kg du gâteau G1 préparé à l'exemple 1 (obtenu par filtration presse et présentant une teneur en matière sèche de 22 % en poids et une teneur en Na₂SO₄ de 1 % en poids), préalablement porté à 60 °C.

Puis on introduit simultanément, pendant la défloculation, du gâteau 13,1 ml d'une solution d'aluminate de sodium (ayant une teneur en Al₂O₃ de 22 % en poids et une teneur en Na₂0 de 18 % en poids (densité : 1,505)) et 7,47 ml d'une solution d'acide sulfurique à 80 g/l (densité : 1,505), de manière à maintenir le pH à une valeur de 6,5.

Le rapport pondéral Al/SiO₂ est d'environ 2600 ppm.

On laisse mûrir pendant 20 minutes en poursuivant la défloculation mécanique.

La suspension G2 de silice obtenue est caractérisée par :
- une viscosité de 0,06 Pa.s (mesurée sous un cisaillement de 50 s⁻¹ pendant 1 minute) ;
- une granulométrie telle que d₁₀ = 5 µm, d₅₀ = 19 µm, d₉₀ = 60 µm. Au bout d'une semaine de stockage, on observe :
- la formation, au fond du récipient de stockage, d'un dépôt excessivement difficile, voire impossible, à redisperser ;
- une augmentation de la viscosité de la suspension : sa viscosité est alors de 0,45 Pa.s (mesurée sous un cisaillement de 50 s⁻¹ pendant 1 minute).

### EXEMPLE 3

1 kg de la suspension G2 préparée à l'exemple 2 (prélevée après le délitage), présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 220 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G3 homogène, présentant les caractéristiques suivantes :

| | |
|---|---|
| • pH | 3,25 |
| • teneur en matière sèche (% en poids) | 28,4 |
| • teneur en silice (% en poids) (calculée en silice anhydre) | 18,0 |
| • teneur en sulfate d'aluminium (% en poids) (calculée en sulfate d'aluminium anhydre) | 10,4 |

De plus, après 2 heures de repos, ladite suspension prend en masse et se présente donc sous la forme d'un gel.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,25 Pa.s.

Cette suspension laissée au repos se retransforme en gel au bout de 2 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 4

1 kg de la suspension G2 préparée à l'exemple 2 (prélevée après le délitage), présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 100 grammes d'eau et 880 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G4 homogène, présentant les caractéristiques suivantes :

| | |
|---|---|
| • pH | 2,6 |
| • teneur en matière sèche (% en poids) | 36,7 |
| • teneur en silice (% en poids) (calculée en silice anhydre) | 11,1 |
| • teneur en sulfate d'aluminium (% en poids) (calculée en sulfate d'aluminium anhydre) | 25,6 |

De plus, après 24 heures de repos, ladite suspension prend en masse et se présente donc sous la forme d'un gel.

Ce gel présente des viscosités V₁, V₂ et V₃ (mesurées selon le protocole indiqué dans la description) respectivement égales à 1,8 Pa.s, 0,23 Pa.s et 0,17 Pa.s.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,17 Pa.s.

Cette suspension laissée au repos se retransforme en gel au bout de 24 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 5

1 kg de la suspension G2 préparée à l'exemple 2 (prélevée après le délitage), présentant une teneur en matière sèche de 22 % en poids, est homogénéisé par agitation mécanique dans un récipient muni d'un agitateur RAYNERI disposant d'une pâle (500 tr/min pendant 5 minutes).

On effectue ensuite la désagglomération de la suspension obtenue en utilisant un SONIFICATEUR VIBRACELL BIOBLOCK (600 W), équipé d'une sonde de diamètre 19 mm.

Pour cela, on introduit 250 ml de cette suspension dans un bécher de 400 ml, puis on procède à la désagglomération comme suit : la sonde étant immergée sur une largeur de 4 cm, on règle la puissance de sortie de manière à obtenir une déviation de l'aiguille du cadran de puissance indiquant 40 % (ce qui correspond à une énergie dissipée par l'embout de la sonde de 240 Watts/cm²). La désagglomération est effectuée pendant 15 minutes.

La suspension G5 obtenue est caractérisée par :
- une viscosité de 0,011 Pa.s (mesurée sous un cisaillement de 50 s⁻¹ pendant 1 minute);
- une granulométrie telle que d₁₀ = 1,9 µm, d₅₀ = 5,6 µm, d₉₀ = 13 µm ;
- une teneur en matière sèche de 22 % en poids.

### EXEMPLE 6

1 kg de la suspension G5 préparée à l'exemple 5, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 220 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G6 homogène, présentant les caractéristiques suivantes :

| | |
|---|---|
| • pH | 3,25 |
| • teneur en matière sèche (% en poids) | 28,4 |
| • teneur en silice (% en poids) (calculée en silice anhydre) | 18,0 |
| • teneur en sulfate d'aluminium (% en poids) (calculée en sulfate d'aluminium anhydre) | 10,4 |

De plus, après 2 heures de repos, ladite suspension prend en masse et se présente donc sous la forme d'un gel.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,045 Pa.s.

Cette suspension laissée au repos se retransforme en gel au bout de 2 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 7

On alimente la chambre d'un broyeur NETZCH LME1 avec 2 litres de suspension G2 préparée à l'exemple 2 (prélevée après le délitage), présentant une teneur en matière sèche de 22 % en poids, à un débit de 0,083 litres/min ; le taux de remplissage de la chambre avec des billes d'alumine (diamètre : 0,6-1 mm) est de 75 % et la vitesse de rotation de l'arbre est de 2000 tr/min.

A l'issue de cette étape de broyage humide, on obtient une suspension G7 caractérisée par :
- une viscosité de 0,016 Pa.s (mesurée sous un cisaillement de 50 s⁻¹ pendant 1 minute) ;
- une granulométrie telle que d₁₀ = 1,13 µm, d₅₀ = 2,1 µm, d₉₀ = 5,4 µm ;
- une teneur en matière sèche de 22 % en poids.

### EXEMPLE 8

1 kg de la suspension G7 préparée à l'exemple 7, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 220 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G8 homogène, présentant les caractéristiques suivantes :

| | |
|---|---|
| • pH | 3,25 |
| • teneur en matière sèche (% en poids) | 28,4 |
| • teneur en silice (% en poids) (calculée en silice anhydre) | 18,0 |
| • teneur en sulfate d'aluminium (% en poids) (calculée en sulfate d'aluminium anhydre) | 10,4 |

De plus, après 2 heures de repos, ladite suspension prend en masse et se présente donc sous la forme d'un gel.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,08 Pa.s.

Cette suspension laissée au repos se retransforme en gel au bout de 2 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 9

1 kg de la suspension G7 préparée à l'exemple 7, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 440 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G9 homogène, présentant les caractéristiques suivantes :

| | |
|---|---|
| • pH | 3,05 |
| • teneur en matière sèche (% en poids) | 32,9 |
| • teneur en silice (% en poids) (calculée en silice anhydre) | 15,3 |
| • teneur en sulfate d'aluminium (% en poids) (calculée en sulfate d'aluminium anhydre) | 17,6 |

De plus, après 24 heures de repos, ladite suspension prend en masse et se présente donc sous la forme d'un gel.

Ce gel présente des viscosités V₁, V₂ et V₃ (mesurées selon le protocole indiqué dans la description) respectivement égales à 7,27 Pa.s, 0,20 Pa.s et 0,075 Pa.s.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,11 Pa.s.

Cette suspension laissée au repos se retransforme en gel au bout de 24 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 10

1 kg de la suspension G7 préparée à l'exemple 7, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 100 grammes d'eau et 880 grammes de sulfate d'aluminium hydraté Al₂(SO₄)₃, 14H₂O sous forme de poudre, en 3 minutes.

On poursuit l'agitation pendant une quinzaine de minutes.

On obtient une suspension G10 homogène, présentant les caractéristiques suivantes :

| | |
|---|---|
| • pH | 2,6 |
| • teneur en matière sèche (% en poids) | 36,7 |
| • teneur en silice (% en poids) (calculée en silice anhydre) | 11,1 |
| • teneur en sulfate d'aluminium (% en poids) (calculée en sulfate d'aluminium anhydre) | 25,6 |

De plus, après 24 heures de repos, ladite suspension prend en masse et se présente donc sous la forme d'un gel.

Ce gel présente des viscosités V₁, V₂ et V₃ (mesurées selon le protocole indiqué dans la description) respectivement égales à 2,5 Pa.s, 0,12 Pa.s et 0,10 Pa.s.

Après une semaine de stockage, on transforme le gel, par un cisaillement de 500 s⁻¹ pendant 1 minute, en une suspension homogène présentant une viscosité (Vr), mesurée sous un cisaillement de 50 S⁻¹ pendant 1 minute, de 0,11 Pa.s.

Cette suspension laissée au repos se retransforme en gel au bout de 24 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

### EXEMPLE 11

1 kg de la suspension G2 préparée à l'exemple 2 (prélevée après le délitage), présentant une teneur en matière sèche de 22 % en poids, et 100 grammes d'eau sont ajoutés à 880 grammes de sulfate d'aluminium hydraté Al₂(SO₄)₃, 14H₂O fondu à 110 °C dans son eau de cristallisation.

L'addition est effectuée en une quinzaine de minutes.

On obtient une suspension G11 homogène présentant les caractéristiques suivantes :

| | |
|---|---|
| • pH | 2,6 |
| • teneur en matière sèche (% en poids) | 36,7 |
| • teneur en silice (% en poids) (calculée en silice anhydre) | 11,1 |
| • teneur en sulfate d'aluminium (% en poids) (calculée en sulfate d'aluminium anhydre) | 25,6 |

Cette suspension présente un comportement identique à la suspension G4.

### EXEMPLE 12

1 kg de la suspension G2 préparée à l'exemple 2 (prélevée après le délitage), présentant une teneur en matière sèche de 22 % en poids, et 240 grammes d'eau sont ajoutés à 1020 grammes de sulfate d'aluminium hydraté Al₂(SO₄)₃, 14H₂O fondu à 110 °C dans son eau de cristallisation.

L'addition est effectuée en une quinzaine de minutes.

On obtient une suspension G12 homogène présentant les caractéristiques suivantes :

| | |
|---|---|
| • pH | 2,4 |
| • teneur en matière sèche (% en poids) | 35,8 |
| • teneur en silice (% en poids) (calculée en silice anhydre) | 9,8 |
| • teneur en sulfate d'aluminium (% en poids) (calculée en sulfate d'aluminium anhydre) | 26,0 |

De plus, après 24 heures de repos, ladite suspension prend en masse et se présente donc sous la forme d'un gel.

Ce gel présente des viscosités V₁, V₂ et V₃ (mesurées selon le protocole indiqué dans la description) respectivement égales à 1,0 Pa.s, 0,12 Pa.s et 0,09 Pa.s.

Après une semaine de stockage, on transforme le gel, par un cisaillement de 500 s⁻¹ pendant 1 minute, en une suspension homogène présentant une viscosité (Vr), mesurée sous un cisaillement de 50 s⁻¹ pendant 1 minute, de 0,09 Pa.s.

Cette suspension laissée au repos se retransforme en gel au bout de 24 heures.

Après un mois de stockage, on transforme ce gel, sous faible agitation (500 s⁻¹ pendant 1 minute), en une suspension présentant sensiblement les mêmes caractéristiques que celle obtenue par "cassage" du gel après une semaine de stockage.

## Revendications

1. Suspension aqueuse de silice et de composé d'aluminium choisi parmi le sulfate d'aluminium, les sulfates basiques d'aluminium, les aluns et leurs mélanges, caractérisée en ce qu'elle possède un pH inférieur à 4 et une teneur en matière sèche comprise entre 10 et 50 % en poids, et en ce qu'elle se présente, après une période de repos de 48 heures, sous la forme d'un gel, ledit gel étant réversible sous faible cisaillement.

2. Suspension selon la revendication 1, caractérisée en ce qu'elle possède un pH inférieur à 3,5.

3. Suspension selon l'une des revendications 1 et 2, caractérisée en ce qu'elle possède une teneur en silice (exprimée en silice anhydre) comprise entre 1 et 49 % en poids, de préférence entre 3 et 35 % en poids.

4. Suspension selon l'une des revendications 1 à 3, caractérisée en ce qu'elle possède une teneur en composé d'aluminium (exprimée en composé d'aluminium anhydre) comprise entre 1 et 49 % en poids, de préférence entre 3 et 40 % en poids.

5. Suspension selon l'une des revendications 1 à 4, caractérisée en ce que ledit composé d'aluminium est du sulfate d'aluminium.

6. Suspension selon l'une des revendications 1 à 5, caractérisée en ce que ladite silice est choisie parmi les fumées de silice, les silices précipitées et leurs mélanges.

7. Suspension selon la revendication 6, caractérisée en ce qu'elle contient, à titre de silice, au moins une silice précipitée.

8. Suspension selon l'une des revendications 6 et 7, caractérisée en ce que ladite silice précipitée se présente sous forme de billes sensiblement sphériques ayant une surface spécifique BET comprise entre 140 et 200 m²/g, une surface spécifique CTAB comprise entre 140 et 200 m²/g, une distribution poreuse telle que le volume poreux constitué par les pores dont le diamètre est compris entre 175 et 275 Å représente au moins 50 % du volume poreux constitué par les pores de diamètres inférieurs ou égaux à 400 Å et, de préférence, une taille moyenne d'au moins 80 µm.

9. Suspension selon l'une des revendications 6 et 7, caractérisée en ce que ladite silice précipitée possède :
- une surface spécifique CTAB comprise entre 140 et 240 m²/g,
- un facteur de désagglomération aux ultra-sons (F_{D}) supérieur à 11 ml,
- un diamètre médian (⌀₅₀), après désagglomération aux ultra-sons, inférieur à 2,5 µm.

10. Suspension selon l'une des revendications 6 et 7, caractérisée en ce que ladite silice précipitée possède :
- une surface spécifique CTAB comprise entre 140 et 240 m²/g,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- un facteur de désagglomération aux ultra-sons (F_{D}) supérieur à 5,5 ml,
- un diamètre médian (⌀₅₀), après désagglomération aux ultra-sons, inférieur à 5 µm.

11. Suspension selon l'une des revendications 6 et 7, caractérisée en ce que ladite silice précipitée possède :
- une surface spécifique CTAB comprise entre 100 et 140 m²/g,
- un diamètre médian (⌀₅₀), après désagglomération aux ultra-sons, inférieur à 2,8 µm.

12. Suspension selon l'une des revendications 6 et 7, caractérisée en ce que ladite silice précipitée possède :
- une surface spécifique CTAB comprise entre 140 et 240 m²/g,
- une distribution poreuse telle que le volume poreux constitué par les pores dont le diamètre est compris entre 175 et 275 Å représente moins de 55 % du volume poreux constitué par les pores de diamètres inférieurs ou égaux à 400 Å,
- un diamètre médian (⌀₅₀), après désagglomération aux ultra-sons, inférieur à 4,5 µm.

13. Suspension selon l'une des revendications 1 à 12, caractérisée en ce qu'elle se présente, après une période de repos de 24 heures, sous la forme d'un gel, ledit gel étant réversible sous faible cisaillement.

14. Suspension selon l'une des revendications 1 à 13, caractérisée en ce qu'elle se présente, après une période de repos de 2 heures, sous la forme d'un gel, ledit gel étant réversible sous faible cisaillement.

15. Suspension selon l'une des revendications 1 à 14, caractérisée en ce qu'elle se présente, après un période de repos de 24 heures, sous la forme d'un gel qui possède une viscosité (V₁), mesurée sous un cisaillement de 1 s⁻¹ pendant 1 minute, supérieure à 0,6 Pa.s, de préférence supérieure à 1,5 Pa.s.

16. Suspension selon l'une des revendications 1 à 15, caractérisée en ce que ledit gel est tel qu'un cisaillement de 500 s⁻¹ pendant 1 minute le transforme en une suspension qui présente une viscosité (Vᵣ), mesurée sous un cisaillement de 50 s⁻¹ pendant 1 minute, d'au plus 0,35 Pa.s, en particulier d'au plus 0,30 Pa.s.

17. Suspension selon l'une des revendications 1 à 16, caractérisée en ce que ladite silice est finement divisée.

18. Suspension selon l'une des revendications 1 à 16, caractérisée en ce que ladite silice présente une granulométrie telle que le d₁₀ est compris entre 4 et 10 µm, le d₅₀ est compris entre 15 et 30 µm et le d₉₀ est compris entre 50 et 100 µm.

19. Procédé de préparation d'une suspension selon l'une des revendications 1 à 18, caractérisé en ce qu'il comprend le mélange, sous agitation, de silice sous forme solide avec une solution aqueuse du composé d'aluminium.

20. Procédé selon la revendication 19, caractérisé en ce que ladite silice précipitée est définie à l'une des revendications 8 à 12.

21. Procédé de préparation d'une suspension selon l'une des revendications 1 à 18, caractérisé en ce qu'il comprend le mélange, sous agitation, d'une suspension aqueuse de silice avec ledit composé d'aluminium sous forme de poudre et, éventuellement, de l'eau.

22. Procédé de préparation d'une suspension selon l'une des revendication 1 à 18, caractérisé en ce qu'il comprend le mélange, sous agitation, d'une suspension aqueuse de silice et, éventuellement, de l'eau, avec une solution dudit composé d'aluminium se trouvant à une température comprise entre 15 et 130 °C.

23. Procédé selon la revendication 22, caractérisé en ce qu'il comprend le mélange, sous agitation mécanique, d'une suspension aqueuse de silice précipitée et, éventuellement, d'eau, avec une solution de sulfate d'aluminium se trouvant à une température comprise entre 95 et 130 °C.

24. Procédé selon l'une des revendications 21 à 23, caractérisé en ce que ladite suspension aqueuse de silice a été obtenue par mise en suspension dans l'eau, sous agitation, d'une silice sous forme solide.

25. Procédé selon la revendication 24, caractérisé en ce que ladite suspension aqueuse de silice a été obtenue par mise en suspension, sous agitation mécanique, d'une silice précipitée, en particulier d'une silice précipitée définie à l'une des revendications 8 à 12.

26. Procédé selon l'une des revendications 24 et 25, caractérisé en ce que, après l'étape de mise en suspension dans l'eau, on délite mécaniquement la suspension.

27. Procédé selon la revendication 26, caractérisé en ce que l'on réalise un délitage chimique conjointement au délitage mécanique, en introduisant de l'aluminate de sodium et, de préférence, un acide, de sorte que le pH de la suspension reste compris entre 6 et 7 et le rapport pondéral Al/SiO₂ soit compris entre 1000 et 3300 ppm.

28. Procédé selon l'une des revendications 24 à 27, caractérisé en ce que, après l'étape de mise en suspension dans l'eau ou l'étape de délitage, on effectue un broyage humide ou une désagglomération aux ultra-sons de la suspension.

29. Procédé selon l'une des revendications 21 à 23, caractérisé en ce que ladite suspension aqueuse de silice est une suspension aqueuse de silice précipitée, qui a été obtenue par délitage mécanique d'un gâteau de filtration issu d'une réaction de précipitation de silice.

30. Procédé selon la revendication 29, caractérisé en ce que le gâteau de filtration est obtenu par un procédé comprenant :
(A) une réaction de précipitation de silice par action d'un silicate de métal alcalin M avec un agent acidifiant, pour laquelle :
(i) on forme un pied de cuve initial comportant au moins une partie de la quantité totale du silicate de métal alcalin M engagé dans la réaction et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel de l'agent acidifiant et, le cas échéant, simultanément la quantité restante de silicate de métal alcalin M,
(B) la filtration du mélange réactionnel, de manière à récupérer un gâteau de filtration ayant une teneur en matière sèche comprise entre 8 et 40 % en poids.

31. Procédé selon la revendication 29, caractérisé en ce que le gâteau de filtration est obtenu par un procédé comprenant :
(A) une réaction de précipitation de silice par action d'un silicate de métal alcalin M avec un agent acidifiant, pour laquelle :
(i) on forme un pied de cuve initial comportant une partie de la quantité totale du silicate de métal alcalin M engagé dans la réaction, la concentration en silicate (exprimée en SiO₂) dans ledit pied de cuve initial étant inférieure à 20 g/l,
(ii) on ajoute l'agent acidifiant audit pied de cuve initial jusqu'à ce qu'au moins 5 % de la quantité de M₂O présente dans ledit pied de cuve initial soient neutralisés,
(iii) on ajoute au milieu réactionnel simultanément de l'agent acidifiant et la quantité restante de silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
(B) la filtration du mélange réactionnel, de manière à récupérer un gâteau de filtration ayant une teneur en matière sèche comprise entre 8 et 40 % en poids.

32. Procédé selon l'une des revendications 30 et 31, caractérisé en ce que la filtration du stade (B) est effectuée au moyen d'un filtre presse.

33. Procédé selon l'une des revendications 29 à 32, caractérisé en ce qu'on réalise un délitage chimique conjointement au délitage mécanique, en introduisant de l'aluminate de sodium, et, de préférence un acide, de sorte que le pH de la suspension reste compris entre 6 et 7 et le rapport pondéral Al/SiO₂ soit compris entre 1000 et 3300 ppm.

34. Procédé selon l'une des revendications 29 à 33, caractérisé en ce que, après l'étape de délitage, on effectue un broyage humide ou une désagglomération aux ultra-sons de la suspension.

35. Procédé selon la revendication 34, caractérisé en ce que ladite suspension aqueuse de silice précipitée, après ledit broyage humide ou ladite désagglomération aux ultra-sons, est telle que sa teneur en matière sèche est comprise entre 10 et 40 % en poids, sa viscosité, mesurée sous un cisaillement de 50 s⁻¹ pendant 1 minute, est inférieure à 4.10⁻² Pa.s et la quantité de silice contenue dans le surnageant obtenu après centrifugation de ladite suspension à 7500 tr/min pendant 30 minutes représente plus de 50 % du poids de la silice contenue dans la suspension.

36. Utilisation d'une suspension selon l'une des revendications 1 à 18 ou préparée par le procédé selon l'une des revendications 19 à 35, pour la préparation d'une pâte à papier ou pour le traitement des eaux.

37. Utilisation d'une suspension selon l'une des revendications 1 à 18 ou préparée par le procédé selon l'une des revendications 19 à 35, pour la préparation d'une pâte cimentaire, d'un mortier ou d'un béton.

38. Utilisation d'une suspension selon l'une des revendications 1 à 18 ou préparée par le procédé selon l'une des revendications 19 à 35, pour la préparation d'une pâte cimentaire, d'un mortier ou d'un béton pour la consolidation des puits de pétrole.

## Claims

1. Aqueous suspension of silica and of aluminium compound chosen from aluminium sulphate, basic aluminium sulphates, alums and their mixtures, characterized in that it has a pH lower than 4 and a solids content of between 10 and 50 % by weight, and in that, after a period at rest of 48 hours, it is in the form of a gel, the said gel being reversible under low shear.

2. Suspension according to claim 1, characterized in that it has a pH lower than 3.5.

3. Suspension according to either of claims 1 and 2, characterized in that it has a silica content (expressed as anhydrous silica) of between 1 and 49 % by weight, preferably between 3 and 35 % by weight.

4. Suspension according to one of claims 1 to 3, characterized in that it has an aluminium compound content (expressed as anhydrous aluminium compound) of between 1 and 49 % by weight, preferably between 3 and 40 % by weight.

5. Suspension according to one of claims 1 to 4, characterized in that the said aluminium compound is aluminium sulphate.

6. Suspension according to one of claims 1 to 5, characterized in that the said silica is chosen from silica smokes, precipitated silicas and their mixtures.

7. Suspension according to claim 6, characterized in that it contains at least one precipitated silica as silica.

8. Suspension according to either of claims 6 and 7, characterized in that the said precipitated silica is in the form of substantially spherical beads which have a BET specific surface of between 140 and 200 m²/g, a CTAB specific surface of between 140 and 200 m²/g, a pore distribution such that the pore volume consisting of the pores whose diameter is between 175 and 275 Å represents at least 50 % of the pore volume consisting of the pores of diameters smaller than or equal to 400 Å and, preferably, a mean size of at least 80 µm.

9. Suspension according to either of claims 6 and 7, characterized in that the said precipitated silica has:
- a CTAB specific surface of between 140 and 240 m²/g,
- an ultrasonic disintegration factor (F_{D}) higher than 11 ml,
- a median diameter (⌀₅₀), after disintegration with ultrasound, smaller than 2.5 µm.

10. Suspension according to either of claims 6 and 7, characterized in that the said precipitated silica has:
- a CTAB specific surface of between 140 and 240 m²/g,
- a pore distribution such that the pore volume consisting of the pores whose diameter is between 175 and 275 Å represents less than 50 % of the pore volume consisting of the pores of diameters smaller than or equal to 400 Å,
- an ultrasonic disintegration factor (F_{D}) higher than 5.5 ml,
- a median diameter (⌀₅₀), after disintegration with ultrasound, smaller than 5 µm.

11. Suspension according to either of claims 6 and 7, characterized in that the said precipitated silica has:
- a CTAB specific surface of between 100 and 140 m²/g,
- a median diameter (⌀₅₀), after disintegration with ultrasound, smaller than 2.8 µm.

12. Suspension according to either of claims 6 and 7, characterized in that the said precipitated silica has:
- a CTAB specific surface of between 140 and 240 m²/g,
- a pore distribution such that the pore volume consisting of the pores whose diameter is between 175 and 275 Å represents less than 55 % of the pore volume consisting of the pores of diameters smaller than or equal to 400 Å,
- a median diameter (∅₅₀), after disintegration with ultrasound, smaller than 4.5 µm.

13. Suspension according to one of claims 1 to 12, characterized in that, after a period at rest of 24 hours, it is in the form of a gel, the said gel being reversible under low shear.

14. Suspension according to one of claims 1 to 13, characterized in that, after a period at rest of 2 hours, it is in the form of a gel, the said gel being reversible under low shear.

15. Suspension according to one of claims 1 to 14, characterized in that, after a period at rest of 24 hours, it is in the form of a gel which has a viscosity (V₁), measured under a shear of 1 s⁻¹ for 1 minute, higher than 0.6 Pa s, preferably higher than 1.5 Pa s.

16. Suspension according to one of claims 1 to 15, characterized in that the said gel is such that shearing at 500 s⁻¹ for 1 minute converts it into a suspension which has a viscosity (Vᵣ), measured under a shear of 50 s⁻¹ for 1 minute, of at most 0.35 Pa s, in particular of at most 0.30 Pa s.

17. Suspension according to one of claims 1 to 16, characterized in that the said silica is finely divided.

18. Suspension according to one of claims 1 to 16, characterized in that the said silica has a particle size such that d₁₀ is between 4 and 10 µm, d₅₀ is between 15 and 30 µm and d₉₀ is between 50 and 100 µm.

19. Process for the preparation of a suspension according to one of claims 1 to 18, characterized in that it includes the mixing, with agitation, of silica in solid form with an aqueous solution of the aluminium compound.

20. Process according to claim 19, characterized in that the said precipitated silica is defined in one of claims 8 to 12.

21. Process for the preparation of a suspension according to one of claims 1 to 18, characterized in that it includes the mixing, with agitation, of an aqueous suspension of silica with the said aluminium compound in powder form and, optionally, of water.

22. Process for the preparation of a suspension according to one of claims 1 to 18, characterized in that it includes the mixing, with agitation, of an aqueous silica suspension and, optionally, of water with a solution of the said aluminium compound which is at a temperature of between 15 and 130°C.

23. Process according to claim 22, characterized in that it includes the mixing, with mechanical agitation, of an aqueous suspension of precipitated silica and, optionally, of water, with a solution of aluminium sulphate which is at a temperature of between 95 and 130°C.

24. Process according to one of claims 21 to 23, characterized in that the said aqueous silica suspension has been obtained by suspending in water, with agitation, a silica in solid form.

25. Process according to claim 24, characterized in that the said aqueous silica suspension has been obtained by suspending, with mechanical agitation, a precipitated silica, in particular a precipitated silica defined in one of claims 8 to 12.

26. Process according to either of claims 24 and 25, characterized in that the suspension is disintegrated mechanically after the stage of suspending in water.

27. Process according to claim 26, characterized in that a chemical disintegration is carried out conjointly with the mechanical disintegration, by introducing sodium aluminate and, preferably, an acid, so that the pH of the suspension remains between 6 and 7 and the Al/SiO₂ weight ratio is between 1000 and 3300 ppm.

28. Process according to one of claims 24 to 27, characterized in that, after the stage of suspending in water or the disintegration stage, a wet grinding or a disintegration with ultrasound of the suspension is performed.

29. Process according to one of claims 21 to 23, characterized in that the said aqueous silica suspension is an aqueous suspension of precipitated silica which has been obtained by mechanical disintegration of a filter cake originating from a silica precipitation reaction.

30. Process according to claim 29, characterized in that the filter cake is obtained by a process including:
(A) a reaction of silica precipitation by the action of an alkali metal M silicate with an acidifying agent, in the case of which:
(i) an initial base stock is formed comprising at least a fraction of the total quantity of the alkali metal M silicate introduced into the reaction and an electrolyte, the silicate concentration (expressed as SiO₂) in the said initial base stock being lower than 100 g/l and the electrolyte concentration in the said initial base stock being lower than 17 g/l,
(ii) the acidifying agent is added to the said base stock until a pH value of the reaction mixture of at least approximately 7 is obtained,
(iii) acidifying agent is added to the reaction mixture, if appropriate simultaneously with the remaining quantity of alkali metal M silicate,
(B) the filtration of the reaction mixture, so as to recover a filter cake which has a solids content of between 8 and 40 % by weight.

31. Process according to claim 29, characterized in that the filter cake is obtained by a process including:
(A) a reaction of silica precipitation by the action of an alkali metal M silicate with an acidifying agent, in the case of which:
(i) an initial base stock is formed comprising a fraction of the total quantity of the alkali metal M silicate introduced into the reaction, the silicate concentration (expressed as SiO₂) in the said initial base stock being lower than 20 g/l,
(ii) the acidifying agent is added to the said initial base stock until at least 5 % of the quantity of M₂O present in the said initial base stock is neutralized,
(iii) acidifying agent and the remaining quantity of alkali metal M silicate are simultaneously added to the reaction mixture such that the ratio of added quantity of silicate (expressed as SiO₂)/quantity of silicate present in the initial base stock (expressed as SiO₂) is higher than 4 and at most 100,
(B) the filtration of the reaction mixture, so as to recover a filter cake which has a solids content of between 8 and 40 % by weight.

32. Process according to either of claims 30 and 31, characterized in that the filtration in stage (B) is performed by means of a filter press.

33. Process according to one of claims 29 to 32, characterized in that a chemical disintegration is carried out conjointly with the mechanical disintegration by introducing sodium aluminate and, preferably, an acid, so that the pH of the suspension remains between 6 and 7 and the Al/SiO₂ weight ratio is between 1000 and 3300 ppm.

34. Process according to one of claims 29 to 33, characterized in that, after the disintegration stage, a wet grinding or a disintegration with ultrasound of the suspension is performed.

35. Process according to claim 34, characterized in that, after the said wet grinding or the said disintegration with ultrasound, the said aqueous suspension of precipitated silica is such that its solids content is between 10 and 40 % by weight, its viscosity, measured under a shear of 50 s⁻¹ for 1 minute, is lower than 4x10⁻² Pa s and the quantity of silica present in the supernatant obtained after centrifuging the said suspension at 7500 rev/min for 30 minutes represents more than 50 % of the weight of the silica present in the suspension.

36. Use of a suspension according to one of claims 1 to 18 or prepared by the process according to one of claims 19 to 35, for the preparation of a paper pulp or for water treatment.

37. Use of a suspension according to one of claims 1 to 18 or prepared by the process according to one of claims 19 to 35, for the preparation of a cement mix, of a mortar or of a concrete.

38. Use of a suspension according to one of claims 1 to 18 or prepared by the process according to one of claims 19 to 35, for the preparation of a cement mix, of a mortar or of a concrete for the consolidation of oil wells.

## Patentansprüche

1. Wäßrige Suspension von Kieselerde und Aluminiumverbindung, ausgewählt aus Aluminiumsulfat, basischen Aluminiumsulfaten, Alaunen und deren Mischungen, dadurch gekennzeichnet, daß sie einen pH-Wert unter 4 und einen Gehalt an Trockensubstanz zwischen 10 und 50 Gew.-% aufweist und daß sie nach einer Ruhezeit von 48 h in Form eines Gels vorliegt, wobei dieses Gel unter schwacher Scherung reversibel ist.

2. Suspension nach Anspruch 1, dadurch gekennzeichnet, daß sie einen pH-Wert unter 3,5 aufweist.

3. Suspension nach einem der Ansprüche 1 und 2, dadurch gekennzeichnet, daß sie einen Gehalt an Kieselerde (ausgedrückt als wasserfreies Siliciumdioxid) zwischen 1 und 49 Gew.%, vorzugsweise zwischen 3 und 35 Gew.-% aufweist.

4. Suspension nach einem der Ansprüche 1 bis 3, dadurch gekennzeichnet, daß sie einen Gehalt an Aluminiumverbindung (ausgedrückt als wasserfreie Aluminiumverbindung) zwischen 1 und 49 Gew.-%, vorzugsweise zwischen 3 und 40 Gew.-% aufweist.

5. Suspension nach einem der Ansprüche 1 bis 4, dadurch gekennzeichnet, daß die Aluminiumverbindung Aluminiumsulfat ist.

6. Suspension nach einem der Ansprüche 1 bis 5, dadurch gekennzeichnet, daß die Kieselerde ausgewählt wird aus Quarzstäuben, präzipitierten Kieselerden und deren Mischungen.

7. Suspension nach Anspruch 6, dadurch gekennzeichnet, daß sie als Kieselerde mindestens eine präzipitierte Kieselerde umfaßt.

8. Suspension nach einem der Ansprüche 6 und 7, dadurch gekennzeichnet, daß die präzipitierte Kieselerde in Form von im wesentlichen kugelförmigen Kügelchen mit einer spezifischen BET-Oberfläche mischen 140 und 200 m^{²}/g, einer spezifischen CTAB-Oberfläche mischen 140 und 200 m^{²}/g, einer Porenverteilung, bei der das Porenvolumen, das durch die Poren, deren Durchmesser mischen 175 und 275 Å liegt, gebildet wird, mindestens 50% des Porenvolumens ausmacht, das durch die Poren mit Durchmessern unterhalb oder gleich 400 Å gebildet wird, und vorzugsweise mit einer mittleren Größe von mindestens 80 µm vorliegt.

9. Suspension nach einem der Ansprüche 6 und 7, dadurch gekennzeichnet, daß die präzipitierte Kieselerde aufweist:
- eine spezifische CTAB-Oberfläche zwischen 140 und 240 m^{²}/g,
- einen Ultraschall-Desagglomerationsfaktor (F_{D}) über 11 ml,
- einen mittleren Durchmesser (⌀₅₀) nach Ultraschall-Desagglomeration unter 2,5 µm.

10. Suspension nach einem der Ansprüche 6 und 7, dadurch gekennzeichnet, daß die präzipitierte Kieselerde aufweist:
- eine spezifische CTAB-Oberfläche zwischen 140 und 240 m²/g,
- eine Porenverteilung, bei der das Porenvolumen, das durch die Poren gebildet wird, deren Durchmesser zwischen 175 und 275 Å liegt, weniger als 50% des Porenvolumens ausmacht, das durch die Poren mit Durchmessern unterhalb oder gleich 400 Å gebildet wird,
- einen Ultraschall-Desagglomerationsfaktor (F_{D}) über 5,5 ml,
- einen mittleren Durchmesser (⌀₅₀) nach Ultraschall-Desagglomeration unter 5 µm.

11. Suspension nach einem der Ansprüche 6 und 7, dadurch gekennzeichnet, daß die präzipitierte Kieselerde aufweist:
- eine spezifische CTAB-Oberfläche zwischen 100 und 140 m^{²}/g,
- einen mittleren Durchmesser (⌀₅₀) nach Ultraschall-Desagglomeration unter 2,8 µm.

12. Suspension nach einem der Ansprüche 6 und 7, dadurch gekennzeichnet, daß die präzipitierte Kieselerde aufweist:
- eine spezifische CTAB-Oberfläche zwischen 140 und 240 m^{²}/g,
- eine Porenverteilung, bei der das Porenvolumen, das durch die Poren gebildet wird, deren Durchmesser zwischen 175 und 275 Å liegt, weniger als 55 % des Porenvolumens ausmacht, das durch die Poren mit Durchmessern unterhalb oder gleich 400 Å gebildet wird,
- einen mittleren Durchmesser (⌀₅₀) nach Ultraschall-Desagglomeration unter 4,5 µm.

13. Suspension nach einem der Ansprüche 1 bis 12, dadurch gekennzeichnet, daß sie nach einer Ruhezeit von 24 h in Form eines Gels vorliegt, wobei das Gel unter schwacher Scherung reversibel ist.

14. Suspension nach einem der Ansprüche 1 bis 13, dadurch gekennzeichnet, daß sie nach einer Ruhezeit von 2 h in Form eines Gels vorliegt, wobei das Gel unter schwacher Scherung reversibel ist.

15. Suspension nach einem der Ansprüche 1 bis 14, dadurch gekennzeichnet, daß sie nach einer Ruhezeit von 24 h in Form eines Gels vorliegt, das eine Viskosität (V₁), gemessen unter einer Scherung von 1 s⁻¹ während 1 min, über 0,6 Pa·s, vorzugsweise über 1,5 Pa·s aufweist.

16. Suspension nach einem der Ansprüche 1 bis 15, dadurch gekennzeichnet, daß das Gel eines ist, das eine Scherung von 500 s⁻¹ während 1 min in eine Suspension überführt, die eine Viskosität (Vᵣ), gemessen unter einer Scherung von 50 s⁻¹ während 1 min, von höchstens 0,35 Pa·s, insbesondere höchstens 0,30 Pa·s aufweist.

17. Suspension nach einem der Ansprüche 1 bis 16, dadurch gekennzeichnet, daß die Kieselerde fein verteilt ist.

18. Suspension nach einem der Ansprüche 1 bis 16, dadurch gekennzeichnet, daß die Kieselerde eine derartige Granulometrie aufweist, daß d₁₀ zwischen 4 und 10 µm, d₅₀ zwischen 15 und 30 µm und d₉₀ zwischen 50 und 100 µm liegt.

19. Verfahren zur Herstellung einer Suspension nach einem der Ansprüche 1 bis 18, dadurch gekennzeichnet, daß es das Mischen von Kieselerde in fester Form mit einer wäßrigen Lösung der Aluminiumverbindung unter Bewegung umfaßt.

20. Verfahren nach Anspruch 19, dadurch gekennzeichnet, daß die präzipitierte Kieselerde in einem der Ansprüche 8 bis 12 definiert ist.

21. Verfahren zur Herstellung einer Suspension nach einem der Ansprüche 1 bis 18, dadurch gekennzeichnet, daß es das Mischen einer wäßrigen Suspension von Kieselerde mit der Aluminiumverbindung in Pulverform und gegebenenfalls von Wasser unter Bewegung umfaßt.

22. Verfahren zur Herstellung einer Suspension nach einem der Ansprüche 1 bis 18, dadurch gekennzeichnet, daß es das Mischen einer wäßrigen Suspension von Kieselerde und gegebenenfalls von Wasser mit einer Lösung der Aluminiumverbindung, die sich auf einer Temperatur zwischen 15 und 130°C befindet, unter Bewegung umfaßt.

23. Verfahren nach Anspruch 22, dadurch gekennzeichnet, däß es das Mischen einer wäßrigen Suspension von präzipitierter Kieselerde und gegebenenfalls von Wasser mit einer Lösung von Aluminiumsulfat, die sich auf einer Temperatur zwischen 95 und 130°C befindet, unter mechanischem Rühren umfaßt.

24. Verfahren nach einem der Ansprüche 21 bis 23, dadurch gekennzeichnet, däß die wäßrige Suspension von Kieselerde erhalten wird durch Suspendieren einer Kieselerde in fester Form in Wasser unter Bewegung.

25. Verfahren nach Anspruch 24, dadurch gekennzeichnet, daß die wäßrige Suspension von Kieselerde erhalten wird durch Suspendieren einer präzipitierten Kieselerde, insbesondere einer präzipitierten Kieselerde, die in einem der Ansprüche 8 bis 12 definiert ist, unter mechanischem Rühren.

26. Verfahren nach einem der Ansprüche 24 und 25, dadurch gekennzeichnet, daß man nach dem Schritt des Suspendierens in Wasser die Suspension mechanisch fragmentiert.

27. Verfahren nach Anspruch 26, dadurch gekennzeichnet, daß man eine chemische Fragmentierung gemeinsam mit der mechanischen Fragmentierung ausführt, indem man Natriumaluminat und vorzugsweise eine Säure derart zusetzt, däß der pH-Wert der Suspension zwischen 6 und 7 bleibt und das Gewichtsverhältnis Al/SiO₂ zwischen 1000 und 3300 ppm liegt.

28. Verfahren nach einem der Ansprüche 24 bis 27, dadurch gekennzeichnet, daß man nach dem Schritt des Suspendierens in Wasser oder dem Schritt der Fragmentierung eine Naßmahlung oder eine Ultraschall-Desagglomeration der Suspension vornimmt.

29. Verfahren nach einem der Ansprüche 21 bis 23, dadurch gekennzeichnet, daß die wäßrige Suspension von Kieselerde eine wäßrige Suspension von präzipitierter Kieselerde ist, die durch mechanische Fragmentierung eines Filterkuchens, der aus einer Präizipitations-reaktion von Kieselerde stammt, erhalten worden ist.

30. Verfahren nach Anspruch 29, dadurch gekennzeichnet, daß der Filterkuchen erhalten worden ist durch ein Verfahren, umfassend:
(A) eine Umsetzung zur Präzipitation von Kieselerde durch Wirkung eines Silikats eines Alkalimetalls M mit einem Ansäuerungsmittel, wofür:
(i) man zu Beginn eine Vorlage bildet, die mindestens einen Teil der Gesamtmenge eines Silikats eines Alkalimetalls M, das an der Umsetzung beteiligt ist, und einen Elektrolyten umfäßt, wobei die Konzentration an Silikat (ausgedrückt als SiO₂) in der zu Beginn gebildeten Vorlage unter 100 g/l beträgt und die Konzentration an Elektrolyt in der zu Beginn gebildeten Vorlage unter 17 g/l beträgt,
(ii) man das Ansäuerungsmittel dieser Vorlage zusetzt, bis ein pH-Wert des Reaktionsmediums von mindestens etwa 7 erhalten wird,
(iii) man dem Reaktionsmedium Ansäuerungsmittel und gegebenenfalls gleichzeitig die restliche Menge des Silikats eines Alkalimetalls M zusetzt,
(B) die Filtration der Reaktionsmischung auf solche Weise, daß ein Filterkuchen wiedergewonnen wird, der einen Gehalt an Trockensubstanz zwischen 8 und 40 Gew.-% aufweist.

31. Verfahren nach Anspruch 29, dadurch gekennzeichnet, daß der Filterkuchen erhalten worden ist durch ein Verfahren, umfassend:
(A) eine Umsetzung zur Präzipitation von Kieselerde durch Wirkung eines Silikats eines Alkalimetalls M mit einem Ansäuerungsmittel, wofür:
(i) man zu Beginn eine Vorlage bildet, die einen Teil der Gesamtmenge des Silikats eines Alkalimetalls M, das an der Umsetzung beteiligt ist, umfaßt, wobei die Konzentration an Silikat (ausgedrückt als SiO₂) in der zu Beginn gebildeten Vorlage unter 20 g/l beträgt,
(ii) man das Ansäuerungsmittel dieser zu Beginn gebildeten Vorlage zusetzt, bis mindestens 5% der Menge von M₂O, die in der zu Beginn gebildeten Vorlage anwesend ist, neutralisiert sind,
(iii) man dem Reaktionsmedium gleichzeitig Ansäuerungsmittel und die restliche Menge des Silikats eines Alkalimetalls M zusetzt, wobei das Verhältnis der Menge von zugesetztem Silikat (ausgedrückt als SiO₂) / Menge von in der zu Beginn gebildeten Vorlage anwesendem Silikat (ausgedrückt als SiO₂) über 4 und höchstens 100 beträgt,
(B) die Filtration der Reaktionsmischung auf solche Weise, daß ein Filterkuchen wiedergewonnen wird, der einen Gehalt an Trockensubstanz zwischen 8 und 40 Gew.-% aufweist.

32. Verfahren nach einem der Ansprüche 30 und 31, dadurch gekennzeichnet, daß die Filtration der Stufe (B) mittels eines Preßfllters ausgeführt wird.

33. Verfahren nach einem der Ansprüche 29 bis 32, dadurch gekennzeichnet, daß man eine chemische Fragmentierung gemeinsam mit der mechanischen Fragmentierung ausführt, indem das Natriumaluminat und vorzugsweise eine Säure derart zugesetzt werden, daß der pH-Wert der Suspension zwischen 6 und 7 bleibt und das Gewichtsverhältnis Al/SiO₂ zwischen 1000 und 3300 ppm liegt.

34. Verfahren nach einem der Ansprüche 29 bis 33, dadurch gekennzeichnet, daß man nach dem Fragmentierungsschritt eine Nahmahlung oder eine Ultraschall-Desagglomeration der Suspension vornimmt.

35. Verfahren nach Anspruch 34, dadurch gekennzeichnet, daß die wäßrige Suspension von präzipitierter Kieselerde nach der Naßmahlung oder der Ultraschall-Desagglomeration eine ist, deren Gehalt an Trockensubstanz zwischen 10 und 40 Gew.-% beträgt, deren Viskosität, gemessen unter einer Scherung von 50 s⁻¹ während 1 min, weniger als 4·10⁻² Pa·s beträgt und die Menge an Kieselerde, die in dem nach Zentrifugation der Suspension bei 7500 Upm während 30 min erhaltenen Überstand enthalten ist, mehr als 50 Gew.-% der in der Suspension enthaltenen Kieselerde ausmacht.

36. Verwendung einer Suspension nach einem der Ansprüche 1 bis 18 oder einer, die durch das Verfahren nach einem der Ansprüche 19 bis 35 hergestellt worden ist, für die Herstellung einer Papiermasse oder zur Behandlung von Wasser.

37. Verwendung einer Suspension nach einem der Ansprüche 1 bis 18 oder einer, die durch das Verfahren nach einem der Ansprüche 19 bis 35 hergestellt worden ist, für die Herstellung von Zementleim, eines Mörtels oder eines Betons.

38. Verwendung einer Suspension nach einem der Ansprüche 1 bis 18 oder einer, die durch das Verfahren nach einem der Ansprüche 19 bis 35 hergestellt worden ist, für die Herstellung eines Zementleims, eines Mörtels oder eines Betons für die Befestigung von Erdölbohrlöchern.
